# FASCICULE DE BREVET EUROPEEN

(11) **EP 1 016 037 B1**
(45) Date de publication et mention de la délivrance du brevet: **16.01.2002**
(21) Numéro de dépôt: 98913817.7
(22) Date de dépôt: 03.03.1998
(51) Int. Cl.: G06K 19/077

(54) **PROCEDE ET SYSTEME D'EMISSION D'ETIQUETTES D'IDENTIFICATION**
VERFAHREN UND SYSTEM ZUR AUSGABE VON ERKENNUNGSMASKEN
METHOD AND SYSTEM FOR ISSUING IDENTIFICATION LABELS

(30) Priorité: 03.03.1997 FR 9702477
(43) Date de publication de la demande: 05.07.2000
(73) Titulaire: IER, 92150 Suresnes (FR)
(72) Inventeur: LAURENT, Jean-Marie, F-95500 Gonesse (FR)
(74) Mandataire: Pontet, Bernard
(86) Numéro de dépôt international: FR9800415
(87) Numéro de publication internationale: WO9839734

(56) Documents cités:
- EP-A- 0 132 183
- EP-A- 0 350 235
- EP-A- 0 595 549
- GB-A- 2 267 682
- US-A- 4 717 438

## Description

La présente invention concerne un procédé pour émettre des étiquettes d'identification. Elle vise également des systèmes pour la mise en oeuvre de ce procédé.

Dans de nombreux secteurs de l'industrie, de la distribution et des transports, l'identification d'objets ou de biens passe par l'utilisation de codes à barres. Or, ce mode d'identification, bien que particulièrement répandu, présente un taux non négligeable d'erreur de lecture (mauvaise lecture ou lecture impossible), ce qui conduit les exploitants et les concepteurs des systèmes d'identification actuels à rechercher d'autres techniques d'identification plus performantes et plus sûres venant en substitution des techniques de code à barres ou en complément de celles-ci.

Il existe déjà des techniques d'identification mettant en oeuvre des étiquettes pré-équipées d'un circuit incluant une puce émettrice radiofréquence (voir par exemple EP-A-0 595 549). Or un inconvénient rencontré avec ces étiquettes pré-équipées réside dans le fait que le circuit radiofréquence peut présenter une épaisseur de l'ordre du millimètre, ce qui pose des problèmes techniques lors du passage de ces étiquettes dans les imprimantes. Plusieurs voies ont été envisagées pour remédier à cet inconvénient, notamment en tentant de réduire l'épaisseur des circuits et des puces, ou en prévoyant des rampes de chaque côté du circuit. Mais ces aménagements n'ont jusqu'à présent pas donné satisfaction ou induiraient des surcoûts inacceptables.

Le but de l'invention est de remédier à ces inconvénients en proposant un procédé d'émission d'étiquettes d'identification, qui permette d'obtenir des étiquettes offrant à la fois une lecture optique et une lecture radiofréquence, tout en ne nécessitant pas de modification sensible des étiquettes ou des puces radiofréquence existantes.

Cet objectif est atteint avec un procédé pour émettre des étiquettes d'identification, comprenant:
- une étape pour imprimer sur une étiquette des premières informations d'identification, et
- une étape pour encoder une puce radiofréquence avec des secondes informations d'identification, caractérisé en ce qu'il comprend en outre, à la suite de l'étape d'impression, une étape pour déposer sur chaque étiquette déjà imprimée un circuit émetteur radiofréquence incluant une puce radiofréquence.

Ainsi, en déposant les puces radiofréquences après l'impression des étiquettes, on élimine les difficultés de passage d'une puce dans une imprimante. Pour la mise en oeuvre de ce procédé, on peut utiliser des circuits radiofréquences de très faible épaisseur fabriqués selon des techniques classiques. Un intérêt majeur de ce procédé est de pouvoir procurer à des opérateurs qui sont déjà équipés d'imprimantes d'étiquettes une fonctionnalité supplémentaire contribuant à une amélioration des performances en matière de sûreté et de fiabilité d'identification, sans que ceux-ci soient contraints pour autant de changer complètement de matériel.

Par ailleurs, l'étape d'encodage de la puce radiofréquence est de préférence effectuée à la suite de l'étape de dépose.

Suivant un mode de réalisation particulièrement avantageux, les circuits radiofréquences sont préalablement fournis sur un ruban continu. Au cours de l'étape de dépose, un circuit radiofréquence sous la forme d'une étiquette est détaché du ruban continu et appliqué progressivement en une zone de dépose prédéterminée sur l'une des faces de l'étiquette.

Les circuits radiofréquences fournis sur le ruban continu sont de préférence préalablement recouverts d'un adhésif. Mais on pourrait également prévoir que les zones de dépose des étiquettes soient préalablement recouvertes d'un adhésif.

Suivant les contraintes et besoins exprimés par les utilisateurs et exploitants du procédé selon l'invention, on peut prévoir que les circuits radiofréquences soient déposés, soit sur les faces d'impression des étiquettes, soit sur les faces opposées aux faces d'impression.

Les informations d'identification inscrites sous forme de codes à barres et sous forme de codes radiofréquences peuvent être identiques, sensiblement identiques ou bien encore complémentaires, en fonction des besoins des exploitants.

Suivant un autre aspect de l'invention, il est proposé un système pour émettre des étiquettes d'identification, mettant en oeuvre le procédé selon l'invention, ce système comprenant:
- des moyens pour imprimer sur une étiquette des informations d'identification,
- des moyens pour encoder une puce radiofréquence avec des informations d'identification, caractérisé en ce qu'il comprend en outre des moyens pour déposer sur chaque étiquette préalablement imprimée un circuit radiofréquence incluant une puce radiofréquence.

D'autres particularités et avantages de l'invention apparaîtront encore dans la description ci-après. Aux dessins annexés donnés à titre d'exemples non limitatifs :
- la figure 1 représente schématiquement la structure d'un système d'émission d'étiquette selon l'invention;
- la figure 2 illustre un mode particulier de fourniture des circuits radiofréquences sur une bande continue;
- la figure 3 représente schématiquement un exemple d'étiquette réalisée avec le système selon l'invention; et
- la figure 4 illustre schématiquement un mode de dépose mis en oeuvre dans le procédé selon l'invention.

On va maintenant décrire un exemple particulier de réalisation d'un système d'émission d'étiquettes d'identification, en référence aux figures précitées.

Le système d'émission d'étiquettes 1 selon l'invention comporte un module d'impression 2 et un module de dépose et d'encodage 3. Le module d'impression 2 comporte un magasin 22 contenant des étiquettes vierges 25 livrées sous la forme d'une bande continue défilant selon un plan de défilement 21, des dispositifs d'entraînement 23, 24, une tête d'impression 20, et une sortie d'éjection 26 des étiquettes imprimées. Ce module d'impression 2 peut en pratique correspondre à une imprimante d'étiquette standard.

Le module de dépose et d'encodage 3 comporte une entrée 39 agencée pour recevoir les étiquettes imprimées issues du module d'impression 2, des dispositifs d'entraînement 33, 34, un dispositif de dépose 37, une unité d'encodage radiofréquence 30, un mécanisme 38 de séparation des étiquettes, et une sortie 31 d'éjection des étiquettes imprimées et encodées.

Le dispositif de dépose 37 comprend un tambour de stockage 35 d'un rouleau 4 d'un ruban ou bande continue 10 contenant une série de circuits radiofréquences incluant chacun des puces radiofréquences, un tambour de réception 36 de la bande continue après dépose, un galet de dépose 40 dont la surface périphérique 41 est située à proximité immédiate du plan de défilement 32 des étiquettes imprimées, et des mécanismes d'entraînement (non représentés). Pour la description de techniques classiques de dépose d'étiquettes en continu, on peut par exemple se référer au document US 4,717,438.

Il est cependant à noter que le procédé d'émission d'étiquettes selon l'invention se distingue des procédés industriels de réalisation d'étiquettes anti-vol ou de cartes à circuits intégrés de l'art antérieur par le fait que, dans la présente invention, les déposes de circuit radiofréquence sont réalisées à la demande à la suite d'une commande d'émission d'étiquette et par conséquent de façon discontinue, à la différence des procédés industriels précités, qui eux . sont intrinsèquement de type continu avec des objectifs de cadence et de productivité.

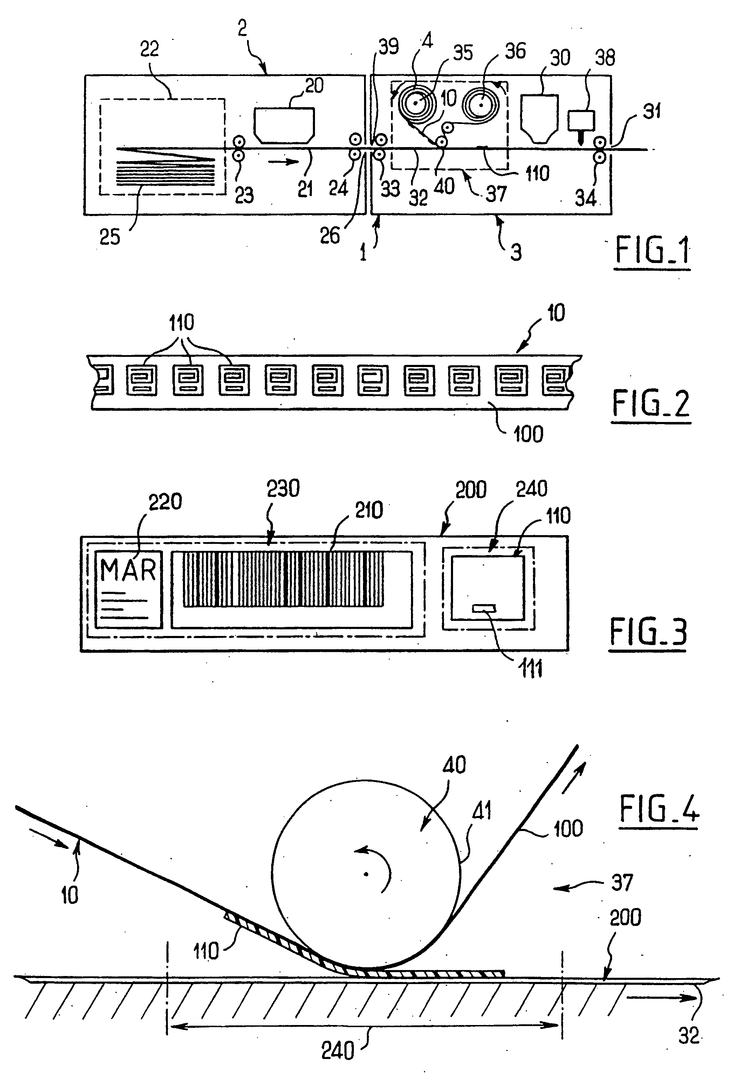

La bande continue 10 comprend, sur un support continu 100 de très faible épaisseur, en silicone ou matériau équivalent, une succession de circuits radiofréquences 110 régulièrement espacés et maintenus sur ce support par un adhésif approprié, en référence à la figure 2. Les circuits radiofréquences 110, de très faible épaisseur, par exemple de l'ordre de 3/10 mm, sont elles-mêmes préalablement recouverts sur leur face externe d'un revêtement adhésif. Ils se présentent généralement sous la forme d'une étiquette en matériau souple, de forme sensiblement rectangulaire et incluant un circuit oscillant et une puce radiofréquence.

Les étiquettes 200 réalisées avec le procédé selon l'invention comprennent, en référence à la figure 3, une zone d'impression 230 comportant par exemple une zone d'identification explicite ou codée 220 et une zone 210 de codes à barres, et une zone de dépose 240 pour recevoir par dépose et collage un circuit radiofréquence 110 incluant une puce radiofréquence. On dispose ainsi d'une étiquette d'identification offrant la complémentarité d'une identification optique et d'une identification radiofréquence.

La dépose des circuits radiofréquences 110 sur les étiquettes préalablement imprimées 200 peut être effectuée de la façon représentée schématiquement en figure 4. La bande continue 10 est entraînée autour du galet de dépose 40 de telle sorte qu'elle se trouve appliquée contre l'étiquette 200 elle-même entraînée selon le plan de défilement 32. Lorsque le circuit radiofréquence 110 porté initialement par la bande continue entre en contact quasi-tangentiel avec la face externe de l'étiquette 110, il se détache alors de la bande continue 10 qui, au delà du galet de dépose 40, est entraînée selon un angle par rapport au plan de défilement 32 significativement plus grand que l'angle d'introduction de la bande continue. Le circuit radiofréquence 110 reste alors collé à. l'étiquette 200 dans la zone de dépose 240 réservée à cet effet.

On peut également envisager un pré-collage de la zone de dépose 240 de l'étiquette 200, ce pré-collage remplaçant le pré-collage de la face externe de chaque circuit ou étiquette radiofréquence ou bien encore venant le compléter.

Il est à noter que le circuit radiofréquence peut être indifféremment collé sur la face d'impression de l'étiquette ou sur la face opposée, en fonction d'impératifs techniques et/ou de souhaits exprimées par les utilisateurs de ces étiquettes. On peut d'ailleurs prévoir un système selon l'invention comportant, dans son module d'impression, une tête d'impression disposée pour imprimer l'étiquette sur une première de ses faces, et, dans son module de dépose, un dispositif de dépose agencé pour déposer un circuit radiofréquence sur la face opposée. On peut aussi prévoir un module de dépose comportant deux dispositifs de dépose de part et d'autre du plan de défilement.

Dans un premier mode de réalisation du système selon l'invention, on peut prévoir que le module de dépose et d'encodage soit indépendant et disposé en sortie d'un module d'impression existant. Dans un second mode de réalisation, le module de dépose et d'encodage peut être inclus dans une structure unique regroupant les fonctions d'impression, de dépose et d'encodage.

Le bagage équipé de l'étiquette à puce radiofréquence obtenue selon l'invention peut ensuite passer dans une machine de tri comportant de manière intégrée ou en amont un portique comportant au moins un moyen à antenne pour la réception et la lecture du message provenant de la puce. Le portique peut aussi comporter des moyens de lecture d'un autre support (code barres) pour les bagages non équipés d'étiquette à puce et/ou pour une double lecture (puce et code barres) d'un bagage équipé d'une étiquette obtenue selon l'invention. Le portique commande par exemple un ou plusieurs aiguillages de tri.

Bien sûr, l'invention n'est pas limitée aux exemples qui viennent d'être décrits et de nombreux aménagements peuvent être apportés à ces exemples sans sortir du cadre de l'invention tel que défini par les revendications. En outre, la présente invention n'est pas liée à une technologie particulière de puce radiofréquence. Par ailleurs, les dimensions respectives des étiquettes et des zones d'impression et de dépose peuvent être quelconques.

## Revendications

1. Procédé pour émettre des étiquettes d'identification (200), comprenant:
- une étape pour imprimer sur une étiquette (200) des premières informations d'identification (230), et
- une étape pour encoder une puce radiofréquence (111) avec des secondes informations d'identification,
**caractérisé en ce qu'**il comprend en outre, à la suite de l'étape d'impression, une étape pour déposer sur chaque étiquette d'identification déjà imprimée (200) un circuit émetteur radiofréquence (110) incluant une puce radiofréquence (111).

2. Procédé selon la revendication 1, **caractérisé en ce que** l'étape d'encodage de la puce radiofréquence (111) est effectuée à la suite de l'étape de dépose.

3. Procédé selon l'une des revendications 1 ou 2, **caractérisé en ce que** les circuits radiofréquence (110) sont préalablement fournis sur un ruban continu (10).

4. Procédé selon la revendication 3, **caractérisé en ce que**, au cours de l'étape de dépose, un circuit radiofréquence (110) est détaché du ruban continu (10) et appliquée progressivement en une zone de dépose (240) prédéterminée sur l'une des faces de l'étiquette (200).

5. Procédé selon la revendication 4, **caractérisé en ce que** les circuits radiofréquences (110) fournis sur le ruban continu (10) sont préalablement recouverts d'un adhésif.

6. Procédé selon l'une des revendications 4 ou 5, **caractérisé en ce que** les zones de dépose (240) des étiquettes (200) sont préalablement recouvertes d'un adhésif.

7. Procédé selon l'une quelconque des revendications précédentes, **caractérisé en ce que** les circuits radiofréquences (110) sont déposés sur les faces d'impression des étiquettes (200).

8. Procédé selon l'une quelconque des revendications 1 à 6, **caractérisé en ce que** les circuits radiofréquences sont déposés sur les faces opposées à celles d'impression.

9. Procédé selon l'une quelconque des revendications précédentes, **caractérisé en ce que** les premières et secondes informations d'identification sont sensiblement identiques.

10. Système (1) pour émettre des étiquettes d'identification, mettant en oeuvre le procédé selon l'une quelconque des revendications précédentes, comprenant:
- des moyens (20) pour imprimer, dans une zone d'impression (230) prédéterminée sur l'une des faces d'une étiquette, des informations d'identification (210, 220),
- des moyens (30) pour encoder une puce radiofréquence (111) avec des informations d'identification,
**caractérisé en ce qu'**il comprend en outre des moyens (37) pour déposer sur chaque, étiquette (200) préalablement imprimée un circuit émetteur radiofréquence (110) incluant une puce radiofréquence (111).

11. Système (1) selon la revendication 10, **caractérisé en ce que** les moyens d'encodage radiofréquence (30) sont disposés en aval des moyens de dépose (37).

12. Système (1) selon l'une des revendications 10 ou 11, **caractérisé en ce que** les moyens de dépose (37) comprennent des moyens (35) pour stocker des circuits radiofréquences (110) disposés sur une bande continue (10) et des moyens (40, 41) pour appliquer successivement chaque circuit radiofréquence (110) contre une zone de dépose (240) prédéterminée sur l'une des faces de l'étiquette (200).

13. Système (1) selon la revendication 12, **caractérisé en ce que** les moyens d'application comprennent un galet (40) dont la surface périphérique (41) est située à proximité du plan de défilement (32) des étiquettes (200), de sorte que le circuit radiofréquence (110). préalablement porté par le ruban continu (10) se trouve plaqué contre l'étiquette (200) lorsqu'elle se trouve engagée entre la surface périphérique (41) du galet (40) et ladite étiquette (200).

14. Système selon l'une quelconque des revendications 10 à 13, **caractérisé en ce que** les moyens de dépose sont agencés pour déposer des circuits radiofréquences sur une face opposée à la face d'impression des étiquettes.

15. Système (1) selon l'une quelconque des revendications 10 à 14, **caractérisé en ce que** les moyens de dépose (37) et les moyens d'encodage (30) sont disposés dans un module distinct (3) de dépose et d'encodage placé en sortie d'un module d'impression d'étiquette (2).

## Claims

1. Method for issuing identification labels (200), comprising:
- a step for printing on a label (200) first identification data (230), and
- a step for encoding a radiofrequency chip (111) with second identification data, **characterized in that** it further comprises, after the printing step, a step for depositing on each identification label already printed (200) a radiofrequency circuit (110) including a radiofrequency chip (111).

2. Method according to claim 1, **characterized in that** the step for encoding the radiofrequency chip (111) is carried out after the depositing step.

3. Method according to any one of claims 1 or 2, **characterized in that** the radiofrequency circuits (110) are supplied in advance on a continuous ribbon (10).

4. Method according to claim 3, **characterized in that**, during the depositing step, a radiofrequency circuit (110) is detached from the continuous ribbon (10) and applied progressively in a predetermined depositing zone (240) on one of the faces of the label (200).

5. Method according to claim 4, **characterised in that** the radiofrequency circuits (110) supplied on the continuous ribbon (10) are covered in advance with an adhesive.

6. Method according to any one of claims 4 or 5, **characterized in that** the depositing zones (240) of the labels (200) are covered in advance with an adhesive.

7. Method according to any one of the preceding claims, **characterised in that** the radiofrequency circuits (110) are deposited on the printing faces of the labels (200).

8. Method according to any one of claims 1 to 6, **characterised in that** the radiofrequency circuits are deposited on the faces opposite the printing ones.

9. Method according to any one of the preceding claims, **characterized in that** the first and second information data are approximately identical.

10. System (1) for issuing identification labels, using the method according to any one of the preceding claims, comprising:
- means (20) for printing, in a predetermined printing zone (230) on one of the faces of a label, identification data (210, 220),
- means (30) for encoding a radiofrequency chip (111) with identification data,
**characterized in that** it further comprises means (37) for depositing on each label (200) previously printed a radiofrequency circuit (110) including a radiofrequency chip (111).

11. System (1) according to claim 10, **characterized in that** the means of radiofrequency encoding (30) are arranged downstream of the depositing means (37).

12. System (1) according to any one of claims 10 or 11, **characterized in that** the depositing means (37) include means (35) for storing radiofrequency circuits (110) arranged on a continuous strip (10) and means (40, 41) for applying successively each radiofrequency circuit (110) against a predetermined depositing zone (240) on one of the faces of the label (200).

13. System (1) according to claim 12, **characterized in that** the means of application comprise a roller (40) whose peripheral surface (41) is situated in the proximity of the run-off plane (32) of the labels (200), in such a way that the radiofrequency circuit (110) previously carried by the continuous ribbon (10) is pressed against the label (200) when it is engaged between the peripheral surface (41) of the roller (40) and said label (200).

14. System according to any one of claims 10 to 13, **characterized in that** the depositing means are arranged so as to deposit radiofrequency circuits on a face opposite the printing face of the labels.

15. System (1) according to any one of claims 10 to 14, **characterized in that** the depositing means (37) and the encoding means (30) are arranged in a separate depositing and encoding module (3) placed at the exit of a label printing module (2).

## Patentansprüche

1. Verfahren zum Ausgeben von Identifizierungsetiketten (200), welches umfasst:
- einen Schritt um auf ein Etikett (200) erste Identifizierungsinformationen (230) zu drucken, und
- einen Schritt um einen Radiofrequenzchip (111) mit zweiten Identifizierungsinformationen zu kodieren,
**dadurch gekennzeichnet, dass** es nach dem Druckschritt ferner einen Schritt aufweist, um auf jedes bereits bedruckte Identifizierungsetikett (200) einen Radiofrequenzsendeschaltkreis (110), welcher einen Radiofrequenzchip (111) enthält, aufzubringen.

2. Verfahren nach Anspruch 1,
**dadurch gekennzeichnet, dass** der Schritt zum Kodieren des Radiofrequenzchips (111) nach dem Aufbringschritt erfolgt.

3. Verfahren nach einem der Ansprüche 1 oder 2,
**dadurch gekennzeichnet, dass** die Radiofrequenzschaltkreise (110) vorher auf einem kontinuierlichen Band (10) zugeführt werden.

4. Verfahren nach Anspruch 3,
**dadurch gekennzeichnet, dass** beim Aufbringschritt ein Radiofrequenzschaltkreis (110) vom kontinuierlichen Band (10) gelöst und nach und nach in einem vorbestimmten Aufbringbereich (240) auf einer der Seiten des Etiketts (200) aufgebracht wird.

5. Verfahren nach Anspruch 4,
**dadurch gekennzeichnet, dass** die auf dem kontinuierlichen Band (10) zugeführten Radiofrequenzschaltkreise (110) zuvor mit einem Klebstoff überzogen werden.

6. Verfahren nach einem der Ansprüche 4 oder 5,
**dadurch gekennzeichnet, dass** die Aufbringbereiche (240) der Etiketten (200) zuvor mit einem Klebstoff überzogen werden.

7. Verfahren nach einem der vorhergehenden Ansprüche,
**dadurch gekennzeichnet, dass** die Radiofrequenzschaltkreise (110) auf die Druckseiten der Etiketten (200) aufgebracht werden.

8. Verfahren nach einem der Ansprüche 1 bis 6,
**dadurch gekennzeichnet, dass** die Radiofrequenzschaltkreise auf diejenigen Seiten aufgebracht werden, die den Druckseiten gegenüberliegen.

9. Verfahren nach einem der vorhergehenden Ansprüche,
**dadurch gekennzeichnet, dass** die ersten und zweiten Identifizierungsinformationen im wesentlichen identisch sind.

10. System (1) zum Ausgeben von Identifizierungsetiketten (200), zur Durchführung des Verfahrens nach einem vorhergehenden Ansprüche, welches umfasst:
- Mittel (20) um in einem vorbestimmten Druckbereich (230) auf einer der Seiten eines Etiketts Identifizierungsinformationen (210, 220) zu drucken,
- Mittel (30) um einen Radiofrequenzchip (111) mit Identifizierungsinformationen zu kodieren,
**dadurch gekennzeichnet, dass** es ferner Mittel (37) aufweist, um auf jedes zuvor bedruckte Identifizierungsetikett (200) einen Radiofrequenzsendeschaltkreis (110), welcher einen Radiofrequenzchip (111) enthält, aufzubringen.

11. System nach Anspruch 10,
**dadurch gekennzeichnet, dass** die Mittel zur Radiofrequenzkodierung (30) nach den Mitteln zum Aufbringen (37) angeordnet sind.

12. System nach einem der Ansprüche 10 oder 11,
**dadurch gekennzeichnet, dass** die Mittel zum Aufbringen (37) Mittel (35) zum Lagern der auf einem kontinuierlichen Streifen (10) angeordneten Radiofrequenzschaltkreise (110) und Mittel (40, 41) um jeden Radiofrequenzschaltkreis (110) sukzessiv gegen einen vorbestimmten Aufbringbereich (240) auf einer der Seiten des Etiketts (200) zu drücken, umfassen.

13. System nach Anspruch 12,
**dadurch gekennzeichnet, dass** die Mittel zum Aufdrükken eine Galette (40) umfassen, deren Umfangsfläche (41) sich in der Nähe der Abrollebene (32) der Etiketten (200) befindet, so dass der zuvor von dem kontinuierlichen Band (10) getragene Raaiofrequenzschaltkreis (110) gegen das Etikett (200) gepresst wird, wenn er sich in Eingriff zwischen der Umfangsfläche (41) der Galette (40) und dem Etikett befindet (200).

14. System nach einem der Ansprüche 10 bis 13,
**dadurch gekennzeichnet, dass** die Mittel zum Aufbringen angeordnet sind um die Radiofrequenzschaltkreise auf einer Seite aufzubringen, die der Druckseite der Etiketten gegenüberliegt.

15. System nach einem der Ansprüche 10 bis 14,
**dadurch gekennzeichnet, dass** die Mittel zum Aufbringen (37) und die Mittel zum Kodieren (30) in einem am Ausgang eines Etikettendruckmoduls (2) befindlichen verschiedenen Modul (3) zum Aufbringen und Kodieren angeordnet sind.
